# EUROPEAN PATENT APPLICATION

(11) **EP 4 481 427 A1**
(43) Date of publication of application: **25.12.2024**
(21) Application number: 23191491.2
(22) Date of filing: 15.08.2023
(51) Int. Cl.: G01S 7/295, G01S 13/86, G01S 13/931, G01S 17/86, G01S 17/931, G01S 7/41, G06N 3/045

(54) **VEHICLE, APPARATUS, COMPUTER PROGRAM, AND METHOD FOR FUSING DATA**

(30) Priority: 19.06.2023 EP 23180044
(71) Applicant: Elektrobit Automotive GmbH, 91058 Erlangen (DE)
(72) Inventor: Chandrasekaran, Kavin, 81739 München (DE); Jancura, Pavol, 5612 AE Eindhoven (NL); Dubbelman, Gijs, 5612 AE Eindhoven (NL); Nourbakhsh, Seyed Hami, 81739 München (DE)
(74) Representative: Continental Corporation

(57) **Abstract**

Embodiments of the present disclosure provide a vehicle, an apparatus, a computer program, and a method (100) for fusing data. The method (100) comprises generating (110) first fused sensor data by fusing the sensor data of the first sensor and the second sensor. The sensor data for the first fused sensor data is in a first processing state. Further, the method (100) comprises generating (120) second fused sensor data by fusing the sensor data of the first sensor and the second sensor. The sensor data for the second fused sensor data is in a second processing state. Also, the method (100) provides for determining (130) an accuracy of the first and the second fused sensor data, and selecting (140), based on the accuracy, one of the first and the second processing state for fusing sensor data of the first and the second sensor.

## Description

Embodiments of the present disclosure provide a vehicle, an apparatus, a computer program, and a method for fusing data. In particular, embodiments relate to a concept for selecting a processing state for fusing sensor data of different sensors.

With the use of multiple sensors in vehicles, sensor data fusion plays an increasingly important role in automotive applications. In practice, vehicles may be equipped with multiple sensors for automated or assisted driving systems. In particular, vehicles may be equipped with one or more cameras and/or radar sensors. Camera sensors are extraordinary for perceiving the environment, however they are very sensitive to day/night conditions. On the other hand, radar sensors are not sensitive to different lighting conditions, but their precision is compromised compared to the camera sensors. So, camera and radar sensors may complement each other, and hence the use of both may be beneficial in highly automated or assisted driving systems.

Still, a higher quality of fused data may be desired for some applications, e.g., automated/autonomous or assisted driving applications.

Therefore, there may be a demand of an improved concept for fusing data.

This demand may be satisfied by the subject-matter of the appended independent claims. The appended dependent claims disclose optional embodiments of the proposed approach.

One idea of embodiments of the present disclosure is to fuse sensor data of different sensors at various stages of a neural network to select an appropriate processing stage for the fusion. This, e.g., allows to select the processing stage where the fusion is most accurate to improve the accuracy of the fused data. According to one aspect of the present disclosure, in doing so, a trade-off between model parameters of an environment/object model and the accuracy may be considered. According to another aspect, embodiments of the present disclosure suggest fusion on raw data of a radar and a camera sensor to increase a quality of the fused data.

Embodiments of the present disclosure provide a method for fusing sensor data of a first and at least one second sensor. The method comprises generating first fused sensor data by fusing the sensor data of the first sensor and the second sensor. The sensor data for the first fused sensor data is in a first processing state. Further, the method comprises generating second fused sensor data by fusing the sensor data of the first sensor and the second sensor. The sensor data for the second fused sensor data is in a second processing state. Also, the method provides for determining an accuracy of the first and the second fused sensor data, and selecting, based on the accuracy, one of the first and the second processing state for fusing sensor data of the first and the second sensor. This, e.g., allows to select a processing state that provides an appropriate or the highest accuracy of the fused data. In this way, more accurate fused data may be provided.

The processing states may be different processing states of a neural network for processing the sensor data.

In practice, the first and the second processing state may be different processing states from a plurality of processing states comprising a processing state before pre-encoding the sensor data, a processing state before encoding the sensor data, one or more processing states after encoding the sensor data, and/or a processing state after decoding the sensor data.

The neural network, e.g., comprises a feature pyramid network (FPN). So, the processing states may be processing states before or after processing stages of the FPN.

Accordingly, encoding the sensor data may comprise encoding the sensor data using an FPN encoder comprising multiple encoding stages. So, the processing states may comprise one or more processing states after respective encoding stages.

A skilled person having benefit from the present disclosure will appreciate that the neural network may be adapted accordingly for the implementation of the proposed approach. In examples, e.g., the sensor data of the first and second sensor data comprise multiple channels, and the FPN encoder may be configured such that the (number of) channels correspond(s) to the channels of the sensor data.

In practice, applications may provide for different sensors. Accordingly, the first sensor may be different from the second sensor. In particular, the first sensor may be of a different type of sensor than the second sensor. In embodiments, the first sensor, e.g., comprises a camera and the second sensor comprises a radar sensor and/or a lidar sensor.

The method may further comprise obtaining a first environment model from the first fused data and a second environment model from the second fused data, determining a first number of parameters for the first environment model and a second number of parameters for the second environment model, and selecting one of the first and the second processing state further based on the first and the second number of parameters. In this way, a trade-off between the accuracy and the number of parameters may be considered. This, e.g., allows to find a favorable trade-off that is suitable for a certain setup, e.g., for a certain hardware setup.

In some embodiments, the sensor data of the first sensor and the second sensor are in polar coordinates.

The method may further comprise applying the selected processing state for generating third fused sensor data. The third fused data, then, may be applied for an envisaged use case, in automotive applications, e.g., for automated or assisted driving. In doing so, the proposed approach provides a higher accuracy of the fused data and may, therefore, provide a higher reliability and/or accuracy of the use case. In automated or assisted driving, the proposed method, e.g., allows for a more reliable and/or accurate detection and/or characterization of objects. In doing so, the proposed method, e.g., leads to a higher safety in automotive applications.

In practice, the method may be executed by a vehicle, accordingly, the method may further comprise applying the third fused sensor data for a function of the vehicle. As mentioned previously, the third fused data, e.g., is used for an automated and/or assisted driving system.

The proposed method, e.g., is implemented in software or a computer program.

Accordingly, embodiments may provide a computer program comprising instructions which, when the computer program is executed by a computer, cause the computer to carry out the proposed method.

Other embodiments provide an apparatus comprising one or more interfaces for communication and a data processing circuit configured to execute the proposed method.

Further embodiments provide a vehicle comprising the apparatus.

### Brief description of the drawings

- Fig. 1: schematically illustrates a flow chart of an embodiment of a method for fusing sensor data of a first and at least one second sensor;
- Fig. 2a & 2b: show block diagrams schematically illustrating an exemplary processing for sensor data of a camera;
- Fig. 3a & 3b: show block diagrams schematically illustrating an exemplary processing for sensor data of a radar sensor;
- Fig. 4a & 4b: show block diagrams schematically illustrating an example of sensor data fusion of sensor data of a camera and a radar sensor for a processing state after their decoders;
- Fig. 5a & 5b: show block diagrams schematically illustrating another example for sensor fusion of sensor data of a camera and a radar sensor after a fourth processing stage;
- Fig. 6a & 6b: show block diagrams schematically illustrating another example for sensor fusion of sensor data of a camera and a radar sensor after a third processing stage;
- Fig. 7-10: show block diagrams schematically illustrating another example for sensor fusion of raw sensor data of a camera and a radar sensor and sensor data fusion before a first processing stage, after a first or second processing stage;
- Fig. 11: exemplarily show results of sensor data fusion for different processing stages; and
- Fig. 12: shows a block diagram schematically illustrating an apparatus according to the proposed approach.

Sensor fusion, also referred to as "sensor data fusion", is the process of combining sensor data or data derived from disparate sources in order that the resulting information has less uncertainty than would be possible when these sources were used individually. For instance, one could potentially obtain a more accurate location estimate of a traffic environment by combining multiple data sources such as different sensors with different capabilities. The term uncertainty reduction in this case can mean more accurate, more complete, or more dependable, or refer to the result of an emerging view, such as stereoscopic vision (calculation of depth information by combining two-dimensional images from two cameras at slightly different viewpoints).

One can distinguish direct fusion, indirect fusion, and fusion of the outputs of the former two. Direct fusion is the fusion of sensor data from a set of heterogeneous or homogeneous sensors, soft sensors, and history values of sensor data, while indirect fusion uses information sources like a priori knowledge about the environment and human input.

Sensor fusion is also known as (multi-sensor) data fusion.

In practice, the sensor data of different sensors may be processed using neural networks. In doing so, the sensor data may be processed in/by multiple processing stages. So, the sensor data assumes different processing states. Embodiments of the present disclosure are based on the finding that the outcome of sensor data fusion varies with different processing states of the sensor data used for the fusion. One idea of the proposed approach is to check the outcome of sensor data fusion for different processing states to select an appropriate processing state for sensor data fusion. In this way, e.g., a desired or the best processing state may be selected to achieve a higher, a desired, and/or ideally the best quality for the fused sensor data. This, e.g., allows to improve the quality of fused sensor data.

In implementations, the proposed approach may be applied during the production of a sensor system or during its operation. In automotive applications, the approach, e.g., may be applied while driving to adapt to varying circumstances, e.g., to select different appropriate processing states for various weather and/or light conditions.

Further details of the proposed approach are now described with more detail below with reference to the appended drawings.

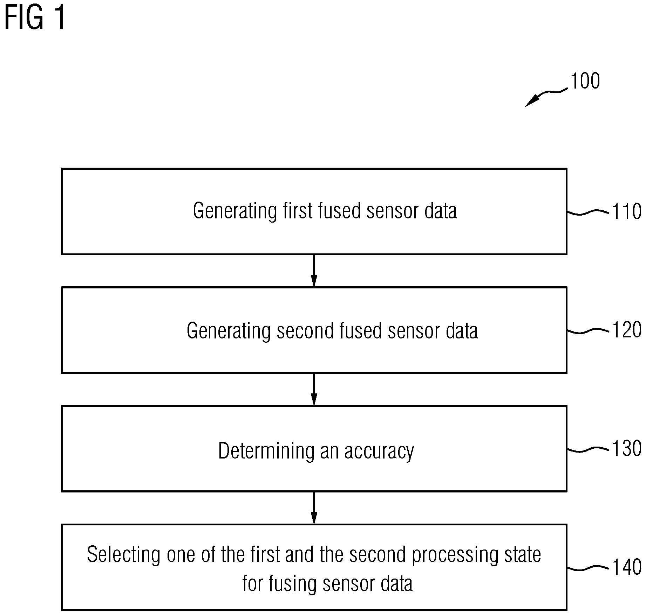

Fig. 1 shows a flow chart schematically illustrating an embodiment of a method 100 for fusing sensor data of a first and at least one second sensor.

The method 100 comprises generating 110 first fused sensor data by fusing the sensor data of the first sensor and the second sensor. For this, the sensor data for the first fused sensor data is in a first processing state.

The first and the second sensor data, e.g., are taken from a processing pipeline including multiple processing stages after a predefined processing stage. For some fusion methods, sensor data to be fused may need to be in the same format and/or same resolution. To this end, appropriate processing states and/or appropriate processing stages may be selected such that the first and the sensor data are suitable for sensor data fusion. In practice, similar processing pipelines including similar processing stages for the first and the second sensor data may be provided.

A skilled person having benefit from the present disclosure will appreciate that an arbitrary fusion method may be applied for fusing the first and the second sensor data. Examples of fusion methods may comprise different algorithms, e.g., a Kalman filter, Bayesian network, Dempster-Shafer, convolutional neural network, and/or a Gaussian process.

Method 100 further provides for generating 120 second fused sensor data by fusing the sensor data of the first sensor and the second sensor. This time, the sensor data for the second fused sensor data is in a second processing state. For example, the first and second sensor data are taken from the processing pipeline after another processing stage.

In practice, the quality (e.g., accuracy) of fused data varies with the processing state used for the sensor data fusion. Method 100 provides for determining 130 an accuracy of the first and the second fused sensor data. Due to the different processing states used for the fusion, the first and the second fused sensor data may have different accuracies.

Method 100 provides for selecting 140, based on the accuracy, one of the first and the second processing state for fusing sensor data of the first and the second sensor. In doing so, e.g., the processing state providing the higher accuracy is selected. In embodiments, e.g., the accuracy of the second fused sensor data may be higher than of the first fused sensor data. Accordingly, the second processing state may be selected. The selected processing state, then, may be used for further sensor data fusion. In this way, e.g., the processing state for the sensor data fusion may be changed to increase the quality of the fused sensor data. In embodiments, e.g., in this way, the processing state is switched from the first to the second processing state to improve the sensor data fusion quality. In other words, the processing state may be adapted to improve the sensor data fusion quality.

In practice, the accuracy of the fused sensor data may (dynamically) vary with environmental circumstances, in automotive applications, e.g., with changing light or weather conditions. In some use cases, the accuracy may also change with the environment itself or the objects in the recorded environment. To cope with such changing accuracies for processing states, the proposed method 100 may be applied repeatedly, e.g., regularly, to dynamically adapt the processing state to changing environments and/or changing environmental conditions/circumstances.

Further details are described below with reference to exemplary ways of processing sensor data for sensor data fusion.

The skilled person appreciates that, in some applications, cameras and radar sensors complement each other to cope with changing light conditions. Accordingly, the first sensor may be a camera and the second sensor may be a radar sensor.

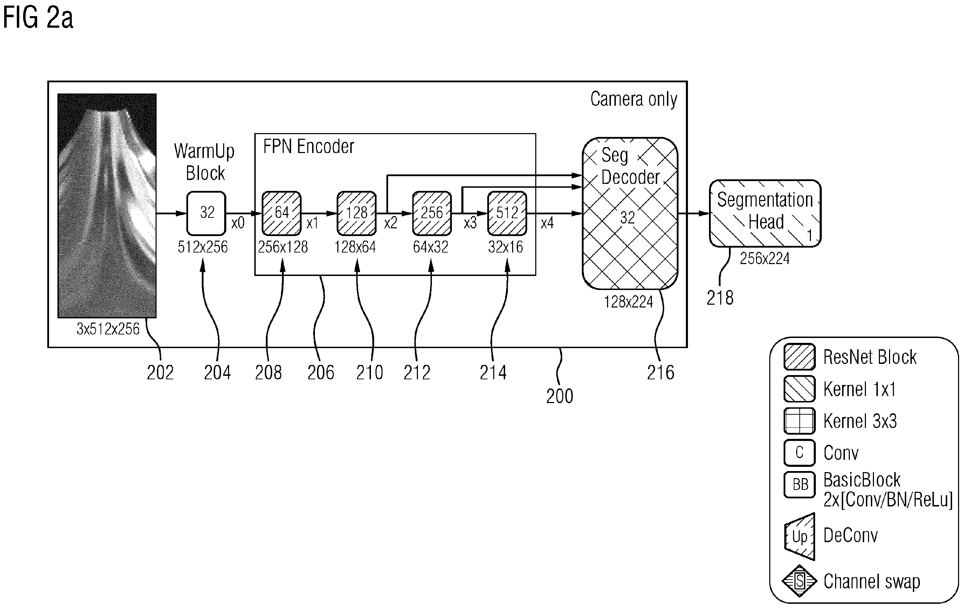

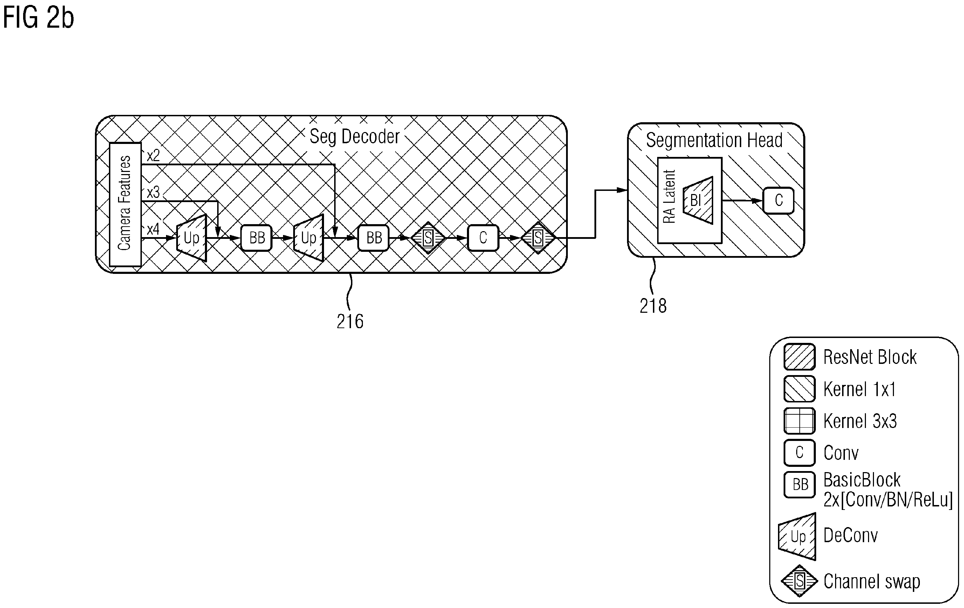

Figs. 2a and 2b show block diagrams schematically illustrating an exemplary processing for sensor data of a camera 200.

The camera 200 records image data 202. In practice, the camera may comprise or correspond to an RGB camera. So, the camera may generate image data including three color channels. In the present example, the camera 200, e.g., has a resolution of 512x256 RGB pixels. Accordingly, the image data 202 has 3x512x256 channels.

The recorded image data 202 is provided to a "WarmUp Block" which is configured to prepare the image data for the further processing. As can be seen from the block diagram, a processing pipeline for the image data 202, e.g., comprises an FPN encoder 206. The WarmUp Block, e.g., The WarmUp Block increases the number of channels of the image data 202 from 3 to 32 using 2D convolution. The processing stage or the resulting processing state is referred to as "x0"

As can be seen from the block diagram the image data is then processed by multiple processing stages (more specifically, encoding stages) of the FPN encoder. In the present example, the FPN encoder, e.g., includes four processing stages 208, 210, 212, and 214. However, in practice, also any other number of processing stages may be applied. The processing stages 208, 210, 212, and 214, e.g., each comprise at least one layer of the FPN encoder 206.

The FPN encoder 206, e.g., is a convolutional neural network (CNN) backbone. In practice, the FPN encoder 206 may be based on examples of such a CNN backbone such as ResNet. According to the principle of such a CNN, the processing stages 208, 210, 212, and 214, are configured to generate feature maps at different spatial resolutions from the image data. In doing so, the feature maps capture hierarchical representations of the image data, where lower layers (e.g., of processing stage 208) contain more fine-grained details than higher layers (e.g., of processing stages 210, 212, and 214).

A first processing stage 208, e.g., is configured to create a feature map at a resolution of 256x128 channels, a second processing stage 210 is configured to create a feature map at a resolution of 128x64 channels, a third processing stage 212 is configured to create a feature map at a resolution of 64x32 channels, and a fourth processing stage 214 is configured to create a feature map at a resolution of 32x16 channels.

The corresponding processing states after the processing stages 208, 210, 212, and 214 are referred to as "x1" after the first processing stage 208, "x2" after the second processing stage 210, "x3" after the third processing stage 212, and "x4" after the fourth processing stage 214.

Then, feature maps are decoded via a segmentation decoder "Seg Decoder" 216. The segmentation decoder is configured for semantic segmentation. It takes the feature maps from the encoder 206, gradually up-samples them, and incorporates skip connections to merge high-level semantic context and fine-grained details. In the present example, the input of the decoder 216, e.g., includes the feature maps of x2, x3, and x4. The decoder 216, e.g., is configured to output high-resolution feature maps. In the present example, the decoder up-samples the input to a resolution of 128x224 channels. A following segmentation head 218, then, processes the feature maps provided by the decoder 216. In doing so, the segmentation head 218 transforms the feature maps of the segmentation decoder 216 into segmentation masks. In doing so, the segmentation head may assign probability scores indicating a class for pixels of the segmentations mask. The segmentation mask, e.g., has a resolution of 256x224 channels.

Fig. 2b shows a block diagram of examples for the decoder 216 and the segmentation head 218. As can be seen, the decoder 216 provides for a processing including numerous de-convolutions, channel swaps, and a convolution. As can be seen from the block diagram, the feature maps of "x2", "x3", and "x4" are fed into the processing at different processing stages of the decoder 216. The decoder 216 includes different processing paths for the feature maps of the different processing states "x2", "x3", and "x4".

The segmentation head 218 provides for another bi-linear interpolation block and convolution for the output of the decoder 216 to create the segmentation mask.

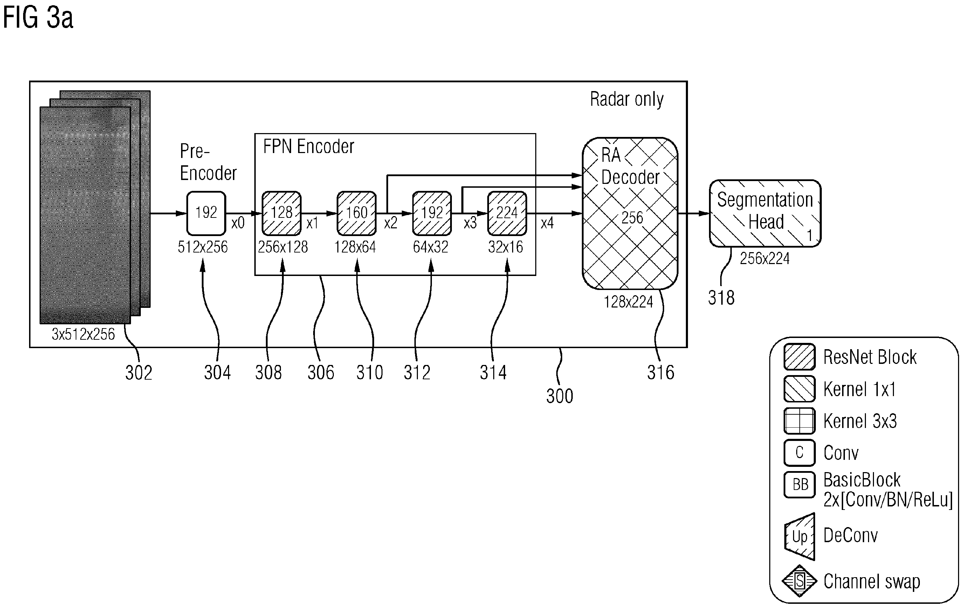

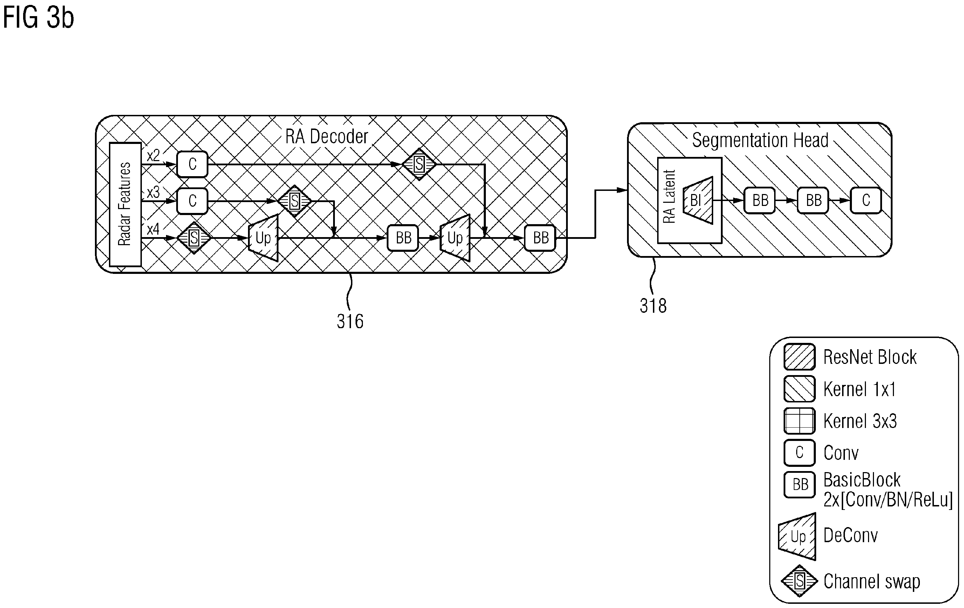

Figs. 3a and 3b show block diagrams schematically illustrating an exemplary processing for sensor data (radar data 302) of a radar sensor 300.

As can be seen from the block diagram, the processing of radar data 302 provides for a similar FPN encoder 306 and a pre-encoder 304 configured to prepare the radar data for the FPN encoder 306.

For this, the pre-encoder 304 increases the number of channels to 192 by keeping the resolution of the radar data 302 to 512x256.. So, the pre-processed radar data for the FPN network has the same resolution 512x256 as the preprocessed image data of "x0". Similarly, the processing state of the pre-processed radar data is referred to as "x0".

The pre-processing is, then, followed by the FPN encoder 306. The FPN encoder 306 is similar to the FPN encoder 206 in the sense that processing stages 308, 310, 312, and 314 are configured to generate feature maps exhibiting the same resolution as the processing stages 208, 210, 212, and 214 as for the image data. Similarly, the corresponding processing states after the processing stages are similarly referred to as "x1", "x2", "x3", and "x4". So, similar processing states for the image data and the radar data match with respect to their resolution. As described in more detail below, this particularly allows to fuse the sensor data of the radar sensor and the camera with corresponding processing states.

Like the processing of the image data, the FPN encoder 306 is followed by a decoder 316 and a segmentation head 318 for further evaluation of the radar data analogously to the image data. As indicated by the block diagram, the decoder 316 transform the feature maps the same resolution as the decoder 216.

As can be seen from Fig. 3b in more detail, the decoder 316 and the segmentation head 318 comprise numerous convolution, de-convolution, and channel switching stages to generate a segmentation mask from the radar data.

According to one idea of the present disclosure, the similar processing states allow to fuse the image data 202 and the radar data 302 in different processing states.

So, in practice the first and the second processing state may be different processing states from a plurality of processing states comprising a processing state before pre-encoding/pre-processing the sensor data (e.g., for the FPN encoder), a processing state before encoding the sensor data (e.g., "x0"), one or more processing states after encoding the sensor data (e.g., "x1", "x2", "x3", or "x4"), and/or a processing state after decoding the sensor data (e.g., after the decoders 216 and 316).

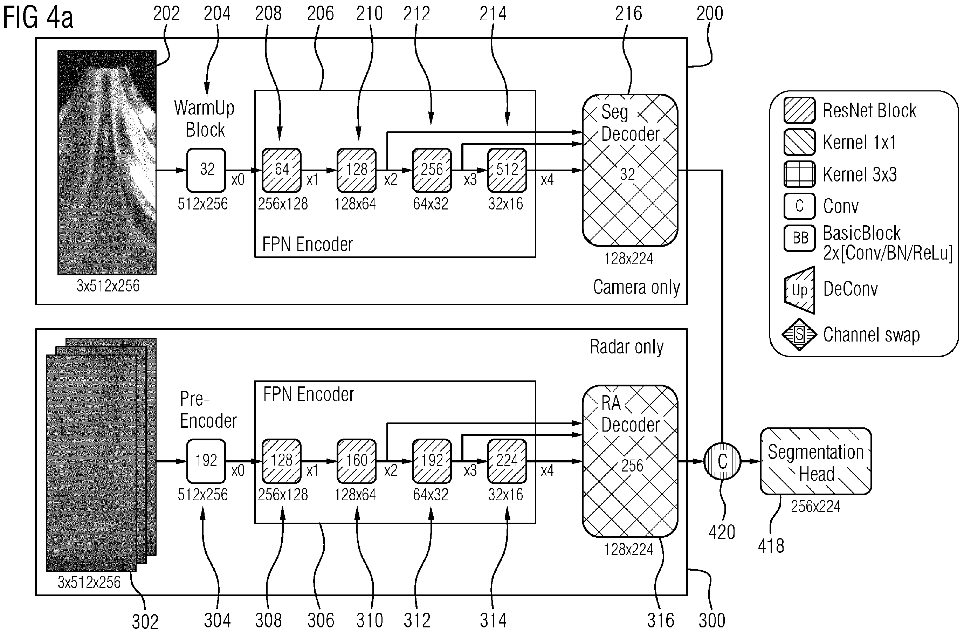

The fusion for different processing states is laid out in more detail below with reference to Figs. 4a to 10.

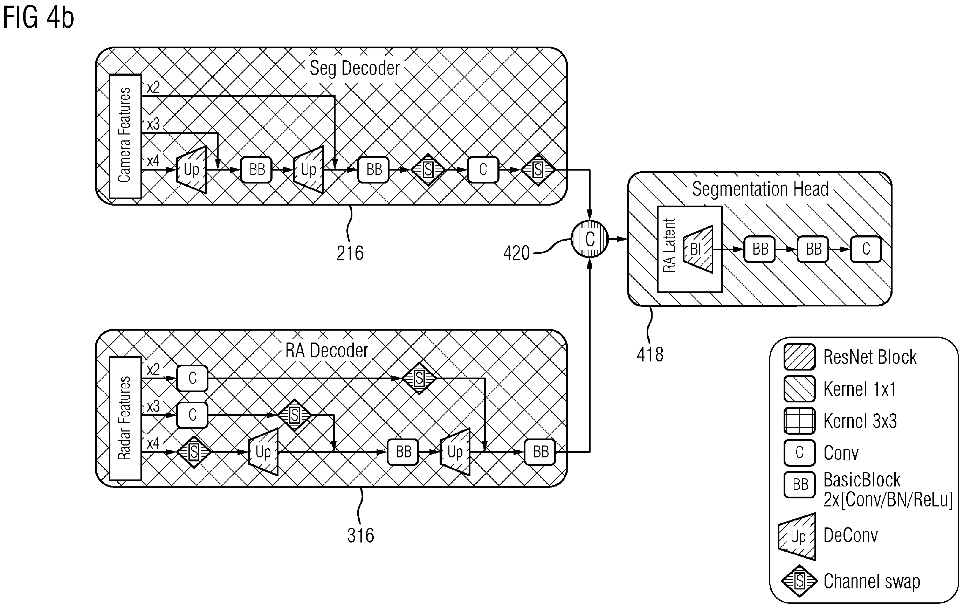

Figs. 4a and 4b relate to sensor data fusion after the decoders 216 and 316. As can be seen from the block diagrams to this end, the feature maps of the decoders 216 and 316 are fused in a fusion stage 420 before the fused feature maps are further processed by a common segmentation head 418. The segmentation head 418 may be adapted to the fused data, as shown in more detail in Fig. 4b.

For this, the size of the seg decoder is 32x128x224 and the size of the RA decoder is 256x128x224. This is a "concatenation-based fusion" hence represented by a letter "c" in the green circle. In the "concatenation-based fusion", it is proposed to concatenate the channels. Which means once the fusion (concatenation) is done, the output will be 288x128x224 (256+32 = 288). Note that the image size itself is still the same 128x224, but only the channel dimensions are increased during concatenation. The "segmentation head" includes a bilinear interpolation block and two basic blocks and one convolution layer that creates a prediction mask. The "bilinear interpolation" is configured to resize the image to 256x224

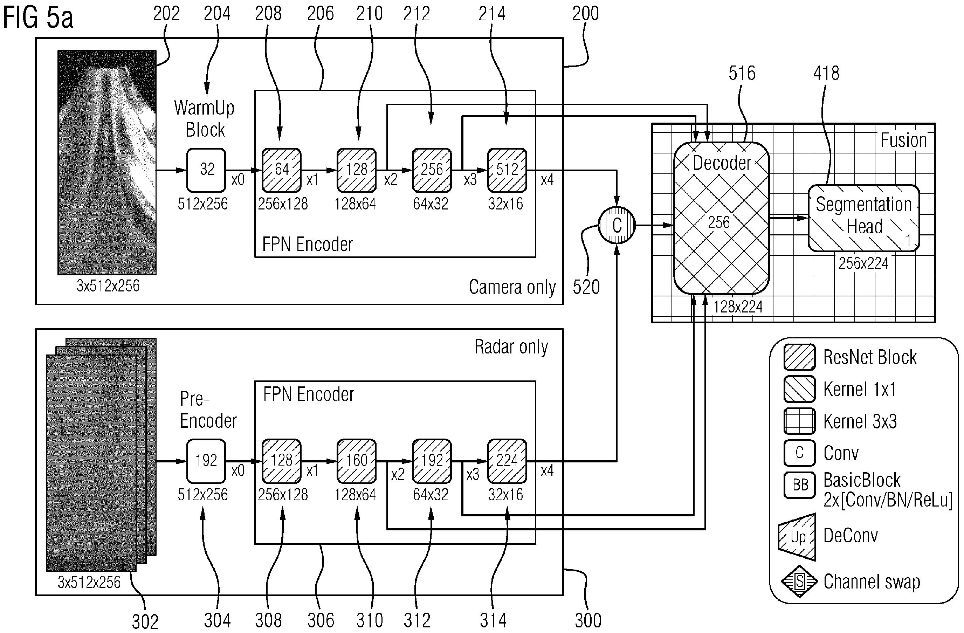

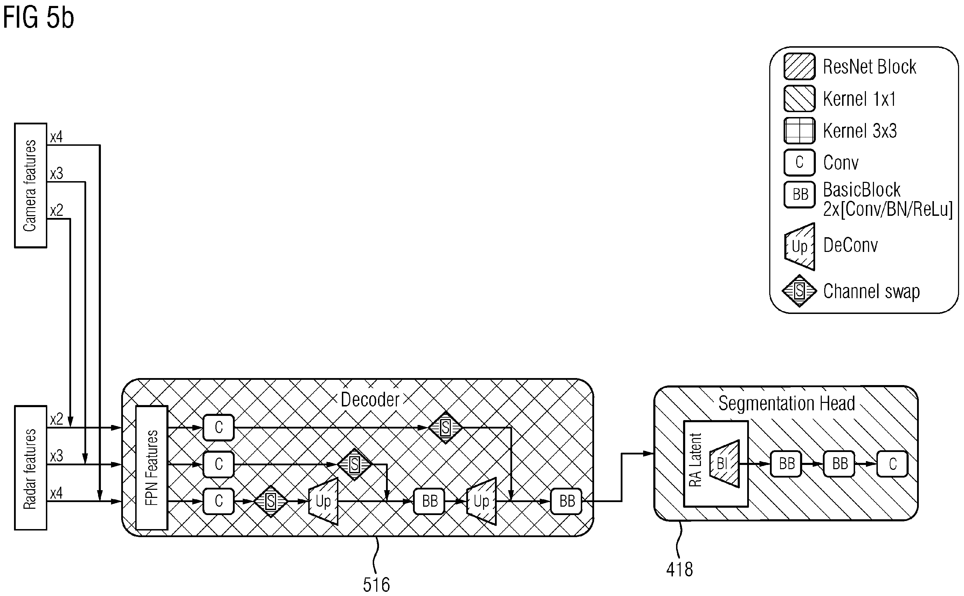

Also, processing state "x4" may be used for the fusion, as laid out in more detail with reference to Fig. 5a and 5b. For this, the feature maps provided by the fourth processing stage 214 and 314 are fused in a fusion stage 520 and the fused feature maps are, then, processed together with the feature maps of "x2" and "x3" by a common decoder 516 and the common segmentation head 418. For this, the feature maps of "x2" and "x3" of the camera and radar processing pipeline are fed directly into the common decoder 516.

The sensor data 202 and 302 may be raw sensor data which may provide a higher accuracy of fused data than other processed data. Also, the sensor data of the first sensor and the second sensor may be in polar coordinates.

The skilled person will appreciate that an arbitrary FPN encoder may be used. In some embodiments. In practice, e.g., a ResNet encoder may be used. However, the ResNet-50 architecture for example itself is huge for the free space segmentation task. Accordingly, the FPN encoder is designed in such a way that it is approximately 8 times smaller than the original Resnet-50 architecture.

As can be seen from Fig. 5b, the common decoder 516 may be specifically adapted for processing the fused feature maps. In fig 5b., the common decoder 516 is adapted in such a way that it comprises three 2D convolution blocks that processes the concatenated features of x2, x3 and x4 respectively.

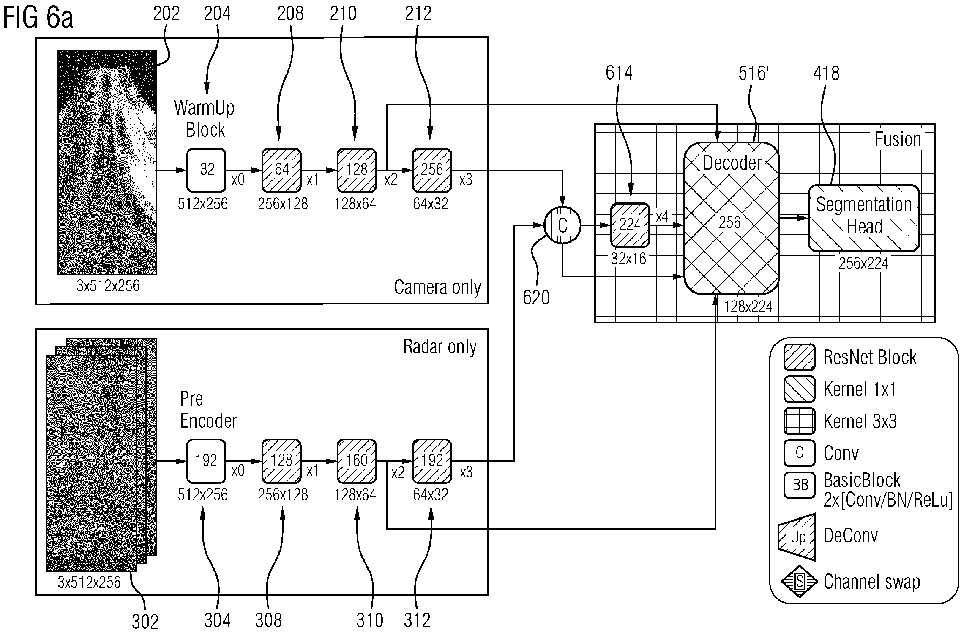

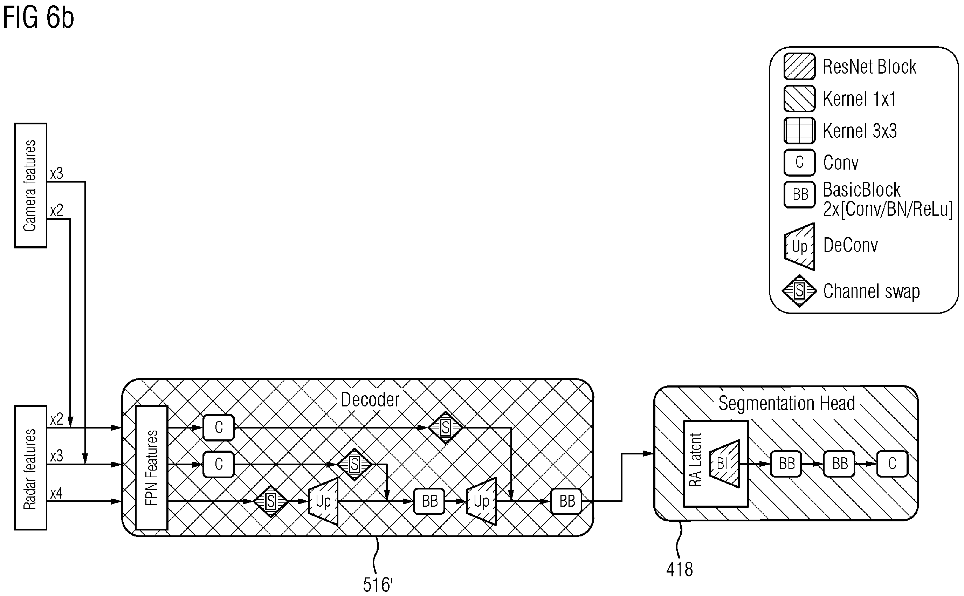

Also, processing state "x3" may be used for the fusion, as laid out in more detail with reference to Fig. 6a and 6b. For this, the feature maps provided by the third processing stage 212 and 312 are fused in a fusion stage 620 and the fused feature map in processing state "x3" is, then, processed in a common fourth processing stage 614 of the FPN encoder to generate a common feature map in processing state "x4". The fused feature map of "x3" is, then, processed together with the common feature map of "x4" and the feature maps of "x2" of the camera and radar processing pipelines are directly fed into a common decoder 516'.

As can be seen from Fig. 6b, the common decoder 516' may be specifically adapted for processing the fused feature maps. In fig 6b., the common decoder 516' is adapted in such a way that it comprises only two 2D convolution blocks that processes the concatenated features of x2, and x3 respectively. It is noted that the 2D convolution blocks will have different inputs channels and output channels based where the fusion take place.

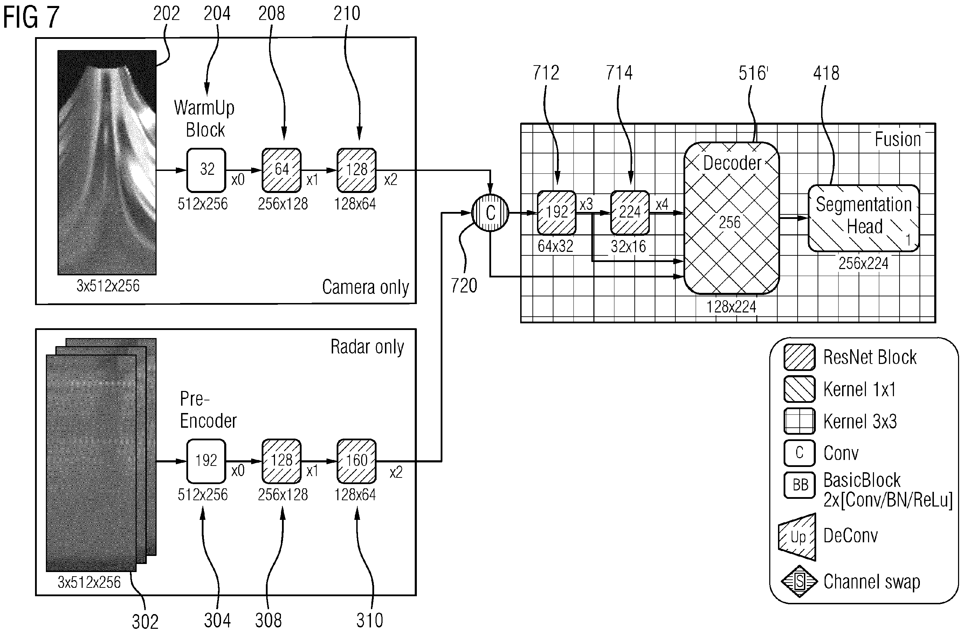

Analogously, the image and radar data may be fused for the processing states "x0", "x1", and "x2" as shown in more detail in Figs. 7 to 9.

Fig. 7 shows a sensor data fusion for processing state "x2". For this, the feature maps of "x2" are fused in a fusion stage 720. Then, the fused feature maps of "x2" are further processed in common processing stages 712 and 714 to create common feature maps of processing states "x3" and "x4". Subsequently, the fused feature map of "x2" and the common feature maps of "x3" and "x4" are processed by the common decoder 516' and segmentation head 418.

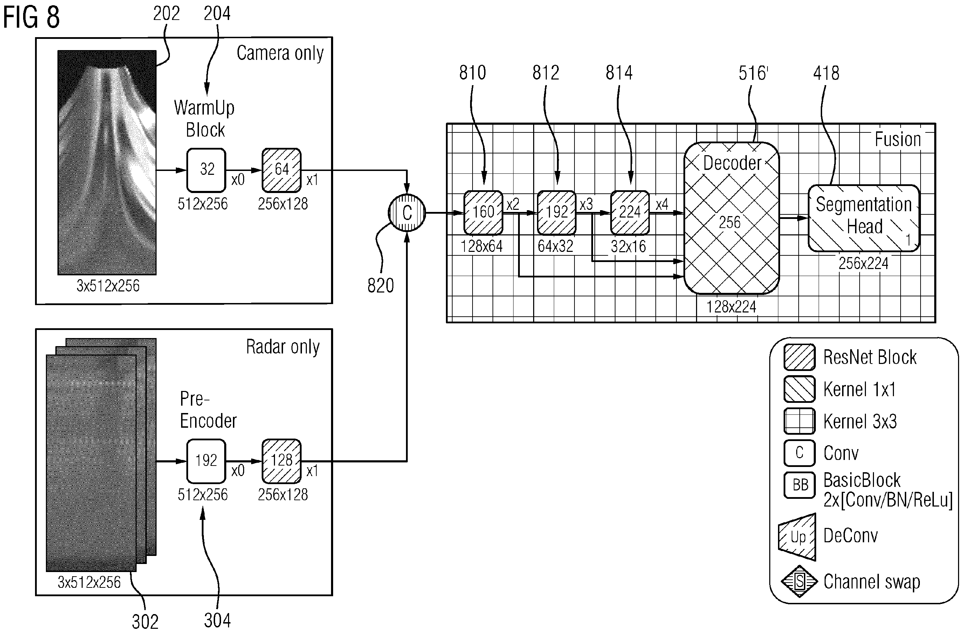

Fig. 8 shows a sensor data fusion for processing state "x1 ". For this, the feature maps of "x1" are fused in a fusion stage 820. Then, the fused feature maps of "x1" are further processed in common processing stages 810, 812, and 814 to create common feature maps of processing states "x2", "x3", and "x4". Subsequently, the common feature maps of "x2", "x3", and "x4" are processed by the common decoder 516' and segmentation head 418.

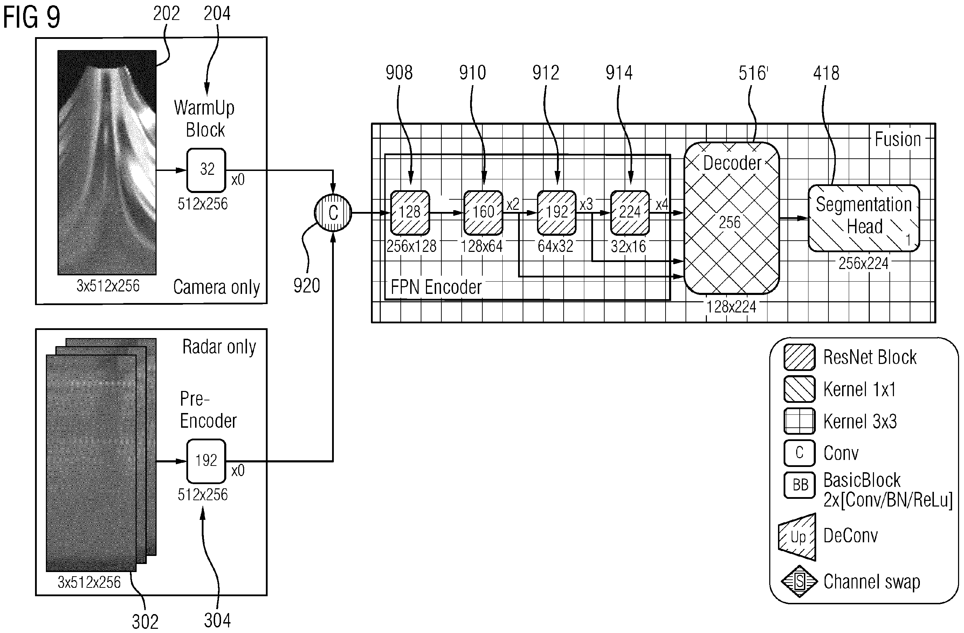

Fig. 9 shows a sensor data fusion for processing state "x0". For this, the pre-processed image and radar data are fused in a fusion stage 920. Then, the fused sensor data are further processed in a common FPN encoder including common processing stages 910, 912, and 914 to create common feature maps of processing states "x1", "x2", "x3", and "x4". Subsequently, the common feature maps of "x2", "x3", and "x4" are processed by the common decoder 516' and segmentation head 418.

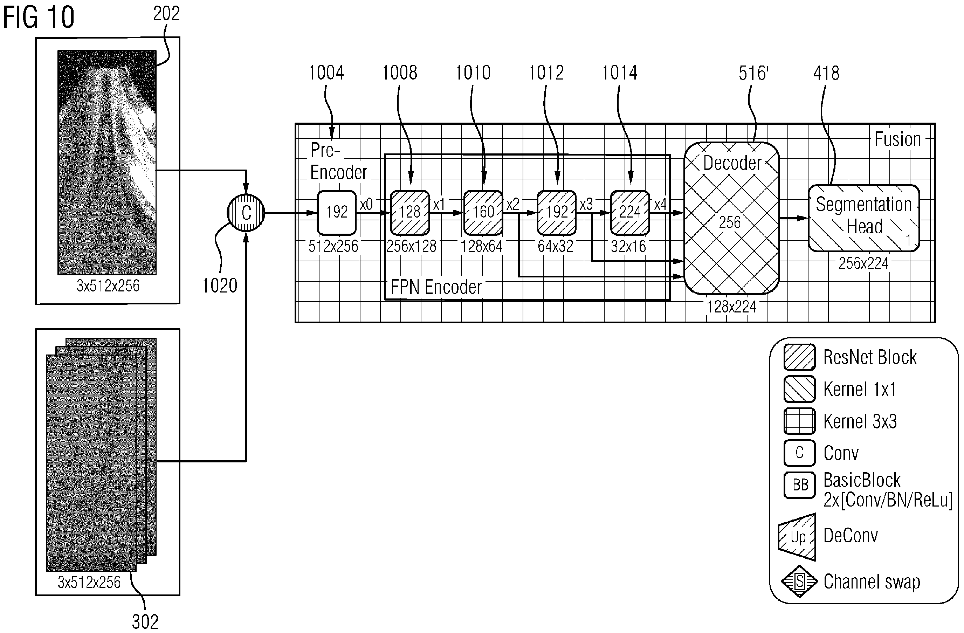

Fig. 10 shows a sensor data fusion for raw image data and radar data. For this, the raw image and radar data are fused in a fusion stage 1020. Then, the fused raw sensor data are further processed in a common processing pipeline including a common pre-encoder 10004 and a common FPN encoder comprising common processing stages 1008, 1010, 1012, and 1014 to create common pre-processed sensor data of "x0" and feature maps of processing states "x1", "x2", "x3", and "x4".

Subsequently, the common feature maps of "x2", "x3", and "x4" are processed by the common decoder 516' and segmentation head 418.

In embodiments, sensor data fusion may be applied for two or more of the above processing states. In practice, e.g., sensor data fusion prior to the pre-encoders, for x0, x1, x2, x3, x4, and after the decoders may be applied. Further, an accuracy of the outcome, e.g., of the resulting segmentation mask may be determined for the used processing states. Then, one of the processing states with an appropriate or the highest accuracy is selected.

The skilled person having benefit from the present disclosure will appreciate that an arbitrary measure of the accuracy may be used for this. In examples, e.g., the mean Intersection over Union (mloU) may be used.

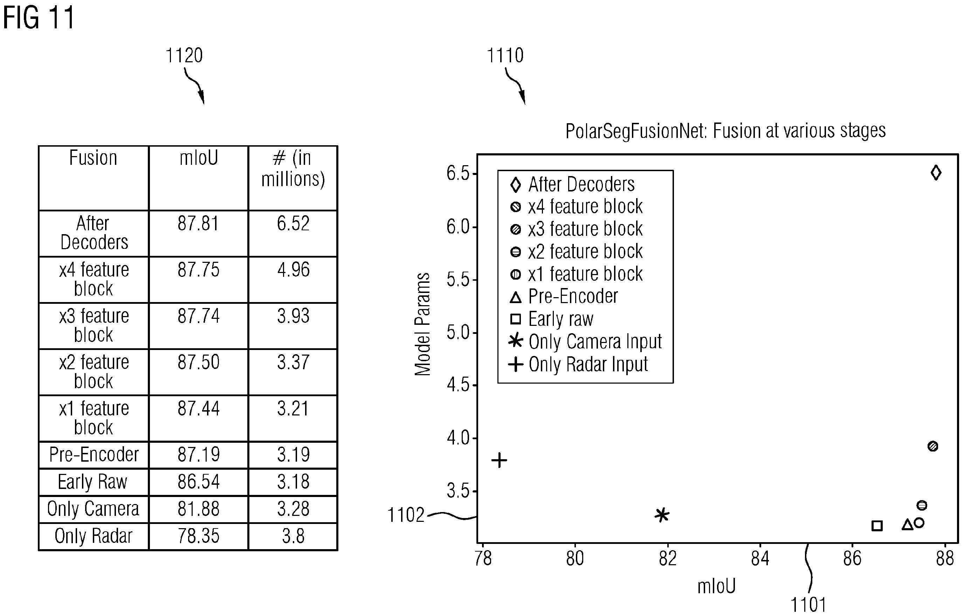

The more fine-grained the fused feature maps, the higher may be the accuracy of the segmentation mask, as indicated by Fig. 11.

Fig. 11 shows a diagram 1110 exemplarily illustrating results of sensor data fusion for the different processing states and non-fused camera and radar data ("input"). The abscissa 1101 of the diagram indicates the accuracy (mIoU). Also, a number of (environment) model parameters used for the results is indicated by the ordinate 1102 of diagram 1110.

Further, Fig. 11 shows a table 1120 displaying the accuracy and number of model parameters in numbers for the used processing states.

As can be seen, from Fig. 11, the accuracy is higher for sensor data fusion based on "later" processing states, i.e., for more processed sensor data for the fusion. Accordingly, later processing states may provide a higher value of the fused data for applications thereof.

However, at the same time, the number of model parameters used increases the later the processed sensor data is fused in the processing pipeline. So, the sensor data fusion for x4 may provide a higher accuracy but also needs more model parameters than for x2. Accordingly, more computing resources (computing power, time, etc.) may be required.

One idea of the present disclosure is to enable an appropriate trade-off between the accuracy and the model parameters to provide an appropriate accuracy at acceptable computing resources. For this, the processing state for the fusion may be selected based on the accuracy and the number of model parameters. In doing so, the processing state with the highest accuracy for an acceptable number of parameters can be selected. In this way, the accuracy of the fused data may be increased for applications providing a limited amount of computing resources.

The selected processing state may, then, be used for further sensor data fusion. For this, e.g., an appropriate processing stages providing the selected processing state is selected and, from then on, data provided by the respective processing stage is fused.

The skilled person will appreciate that the sensor data fusion may be applied in various automotive and non-automotive applications. In automotive applications, the sensor data fusion, e.g., is applied in an autonomous or assisted driving system (ADS). In such applications, the fused sensor data, e.g., represents an environment of a vehicle and the fused sensor data may be used for maneuvering the vehicle through the environment. In such applications, the proposed approach, e.g., allows for a more efficient use of computing resources of the ADS and/or more accurate and/or appropriate maneuvers of the vehicle.

As well, the fused sensor data may be used in any other application of computer vision. In particular, the skilled person will appreciate that the proposed approach may be applied not only for segmentation but also other tasks of computer vision.

In embodiments, one or more steps of the proposed method may be executed by a computer, e.g., by an Electronic Control Unit (ECU) of a vehicle. So, embodiments of the present disclosure may provide a computer-implemented method.

Accordingly, the method may be implemented in a computer program including appropriate instructions to cause a computer to carry out the proposed method.

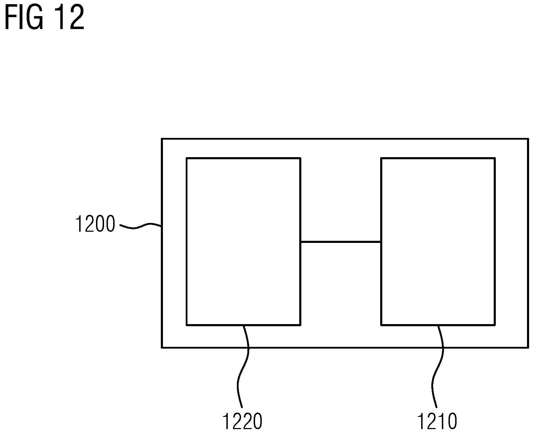

Likewise, the proposed method may be implemented in an apparatus, as laid out in more detail with reference to Fig. 12.

Fig. 12 shows a block diagram schematically illustrating an embodiment of such an apparatus 1200. The apparatus comprises one or more interfaces 1210 for communication and a data processing circuit 1220 configured to execute the proposed method.

In embodiments, the one or more interfaces 1210 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 1220 may correspond to or comprise any type of programable hardware. So, examples of the data processing circuit 1220, e.g., comprise a memory, microcontroller, field programable gate arrays, one or more central, and/or graphical processing units. To execute the proposed method, the data processing circuit 1220 may be configured to access or retrieve an appropriate computer program for the execution of the proposed method from a memory of the data processing circuit 1220 or a separate memory which is communicatively coupled to the data processing circuit 1220.

In practice, the proposed apparatus may be installed on a vehicle. So, embodiments may also provide a vehicle comprising the proposed apparatus. In implementations, the apparatus, e.g., is part or a component of the ADS.

However, in implementations, computing resources for the vehicle may be outsourced to an external server separate from the vehicle. In such implementations, the proposed approach may be also implemented outside of the vehicle.

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

## Claims

1. A method (100) for fusing sensor data of a first and at least one second sensor, the method (100) comprises:
generating (110) first fused sensor data by fusing the sensor data of the first sensor and the second sensor, wherein the sensor data for the first fused sensor data is in a first processing state;
generating (120) second fused sensor data by fusing the sensor data of the first sensor and the second sensor, wherein the sensor data for the second fused sensor data is in a second processing state;
determining (130) an accuracy of the first and the second fused sensor data; and
selecting (140), based on the accuracy, one of the first and the second processing state for fusing sensor data of the first and the second sensor.

2. The method (100) of claim 1, wherein the first and the second processing state are different processing states from a plurality of processing states comprising a processing state before pre-encoding the sensor data, a processing state before encoding the sensor data, one or more processing states after encoding the sensor data, and/or a processing state after decoding the sensor data.

3. The method (100) of claim 2, wherein encoding the sensor data comprises encoding the sensor data using a feature pyramid network, FPN, encoder comprising multiple encoding stages, and wherein the processing states comprise one or more processing states after respective encoding stages.

4. The method (100) of claim 3, wherein the sensor data of the first and second sensor data comprise multiple channels, and wherein the FPN encoder is configured such that the channels correspond to the channels of the sensor data. configured such that channels of the FPN encoder correspond to channels of the sensor data.

5. The method (100) of any one of the preceding claims, wherein the first sensor is different from the second sensor.

6. The method (100) of claim 5, wherein the first sensor is of a different type of sensor than the second sensor.

7. The method (100) of claim 6, wherein the first sensor comprises a camera and the second sensor comprises a radar sensor and/or a lidar sensor.

8. The method (100) of any one of the preceding claims, wherein the method (100) further comprises:
obtaining a first environment model from the first fused data and a second environment model from the second fused data;
determining a first number of parameters for the first environment model and a second number of parameters for the second environment model; and
selecting one of the first and the second processing state further based on the first and the second number of parameters.

9. The method (100) of any one of the preceding claims, wherein the sensor data of the first sensor and the second sensor are in polar coordinates.

10. The method (100) of any one of the preceding claims, wherein the method (100) further comprises applying the selected processing state for generating third fused sensor data.

11. The method (100) of claim 10, wherein the method (100) is executed by a vehicle, and wherein the method (100) further comprises applying the third fused sensor data for a function of the vehicle.

12. A computer program comprising instructions which, when the computer program is executed by a computer, cause the computer to carry out the method (100) of any one of the preceding claims.

13. An apparatus (1200) comprising:
one or more interfaces (1210) for communication; and
a data processing circuit (1220) configured to execute the method (100) of any one of the claims 1 to 11.

14. A vehicle comprising the apparatus (1200) of claim 13.
